# EUROPEAN PATENT SPECIFICATION

(11) **EP 4 483 317 B1**
(45) Date of publication and mention of the grant of the patent: **11.11.2026**
(21) Application number: 22839563.8
(22) Date of filing: 21.11.2022
(51) Int. Cl.: G06Q 20/40, G06N 20/00, G06F 21/41, H04L 9/40, G06Q 40/00, G06F 21/32, G06N 3/04, G06N 3/08, G06Q 30/0201, G06Q 10/40

(54) **ACCOUNT AGGREGATION USING MACHINE LEARNING**
KONTOAGGREGATION UNTER VERWENDUNG VON MASCHINENLERNEN
AGRÉGATION DE COMPTES À L'AIDE D'UN APPRENTISSAGE AUTOMATIQUE

(43) Date of publication of application: 01.01.2025
(73) Proprietor: Google LLC, Mountain View, CA 94043 (US)
(72) Inventor: SHIN, Dongeek, Mountain View, California 94043 (US)
(74) Representative: Marks & Clerk GST
(86) International application number: PCT/US2022/050591
(87) International publication number: WO 2024/112320

(56) References cited:
- US-A1- 2019 281 049
- US-A1- 2021 209 604
- CHATZAKOU DESPOINA DCHATZAKOU@ITI GR ET AL: "User Identity Linkage in Social Media Using Linguistic and Social Interaction Features", 12TH ACM CONFERENCE ON WEB SCIENCE, ACMPUB27, NEW YORK, NY, USA, 6 July 2020 (2020-07-06), pages 295 - 304, XP058451506, ISBN: 978-1-4503-7989-2, DOI: 10.1145/3394231.3397920

## Description

### BACKGROUND

This specification relates to account aggregation. An account enables an entity to access certain resources within a computer system, and users sometimes utilize multiple different accounts within a single computer system or application. US 2021/0209604 A1 discloses the detection of suspicious groups of user accounts based on payment transactions using machine learning. The article "User Identity Linkage in Social Media Using Linguistic and Social Interaction Features" by Chatzakou Despoina et al. discloses the identifying online user accounts that belong to the same person, absed on user interaction data. US 2019/0281049 A1 discloses user authentication based on biometrics (behavior, typing speed/ patterns, etc).

### SUMMARY

This specification describes technologies relating to account aggregation, and more specifically using machine leaming to group accounts while maintaining user privacy. The specification further describes techniques for taking actions, such as authorizing access to a computer system and/or providing resources to account owners, based on an identified aggregate account.

Particular embodiments of the subject matter described in this specification can be implemented so as to realize one or more of the following advantages. The techniques described below can be used to provide privacy for a user account by ensuring that information related to the account is not accessible to other users of the system. The techniques can further be used to confirm that a user account is authorized to access a system or receive certain information, even when the information needed to make the confirmation is spread among multiple different accounts used by the user. In addition, the techniques enable a user account to receive information most relevant to the user's needs and interests. Further, the techniques do not require that a user identify themselves, or the different accounts assigned to the user, thereby protecting the user's privacy while reducing the administrative burden on the system and on the user, and providing accurate aggregation of information and distribution of information to users.

One aspect features obtaining user interaction data for a user describing interactions by the user with a given account of multiple different accounts assigned to the user on one or more computer systems. An input that includes the user interaction data is processed using a machine learning model that is configured to produce a result that includes a first account embedding that differs from the user interaction data. From at least the first account embedding, an account group is determined that corresponds to the user interaction data. A first action is performed based on the account group, wherein the first action differs from a second action that would have been performed based on a different account group that is not the account group.

One or more of the following features can be included. From a first user of a plurality of users, training examples can be obtained, and the training examples can include: (i) an indication of the first user, and (ii) user interaction data describing interactions of the first user with a computer system of the one or more computer systems. The machine learning model using the training examples. The user interaction data can include data relating to at least one of a user interaction with a screen, a keyboard or a mouse. The first action can include authenticating the user at least in part according to the account group. The first action can include providing information to the given account of the multiple different accounts according to the account group. The account group can be determined at least in part by determining Euclidean distances between the first account embedding and account embeddings for at least a subset of known account groups. A location can be determined for the user; and the subset of known account groups can be determined at least in part based on the location.

The details of one or more embodiments of the subject matter described in this specification are set forth in the accompanying drawings and the description below. Other features, aspects, and advantages of the invention will become apparent from the description, the drawings, and the claims.

### BRIEF DESCRIPTION OF THE DRAWINGS

FIG. 1 shows an example of an environment for account aggregation using machine learning.
FIG. 2 is a flow diagram of an example process for account aggregation using machine learning.
FIG. 3 is a block diagram of an example computer system.

### DETAILED DESCRIPTION

It is common for users to create multiple accounts with a single computing provider and across multiple computing providers, and similarly common for users to share access to a device or to devices. For example, a parent might create multiple e-mail accounts with an e-mail provider (e.g., one for work-related items and another for personal use) and the parent might share a device (e.g., a cell phone or tablet computer) with a spouse or child. Similarly, each person with whom the single device is shared may create multiple different accounts for different tasks (e.g., school research, gift shopping, etc.). In this example, information relevant to the parent may be spread across the multiple different accounts, while information that is relevant to another user of the device may not be relevant to the parent. In this situation, the activity of each user is being performed on the same device, so it can be difficult to personalize the user experience by aggregating information at the device level. Furthermore, without obtaining a list of accounts that a particular user uses, it is also difficult to personalize the user experience using information from an account that is actively being used because the information relevant to personalizing the user's experience is spread across seemingly unrelated accounts.

As described below, the techniques of this specification enable a system to determine which seemingly unrelated accounts should be grouped together in a single account group that is used to perform actions that can better personalize the user's experience, without needing to identify the user or obtain information from the user informing the system of the accounts being used by the user. For example, the techniques discussed below include using various device/application interaction signals, such as typing speeds, typing patterns, typing speed variations, swiping patterns, click rates, type of usage, usage time, etc., to predict which accounts are attributable to a single user, such that those multiple accounts can be grouped together as an account group attributable to a single user.

More specifically, the techniques include training a machine learning model to generate an account embedding at run time (e.g., as a user is interacting with a device and/or application) based on the device/application signals input to the model. Once the run time account embedding has been generated, the distance between the run time account embedding and other account group embeddings can be used to determine the appropriate account group to which the run time account embedding is assigned. Once the run time account embedding is assigned to a particular group, the information known about the accounts in that particular account group can be used to personalize the experience for the user. For example, various actions can be taken to provide the user with access to certain information selected using an aggregation of information corresponding to accounts in the particular account group. In this way, a user will be provided a consistent personalized experience irrespective of which of the accounts they are currently using.

As used throughout this document, account aggregation refers to identifying accounts that are deemed to be used by a same user, e.g., based on the techniques discussed herein, and such accounts are said to belong to the same account group. For situations in which the systems discussed here collect and/or use personal information about users, the users may be provided with an opportunity to enable/disable or control programs or features that may collect and/or use personal information (e.g., information about a user's social network, social actions or activities, a user's preferences or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

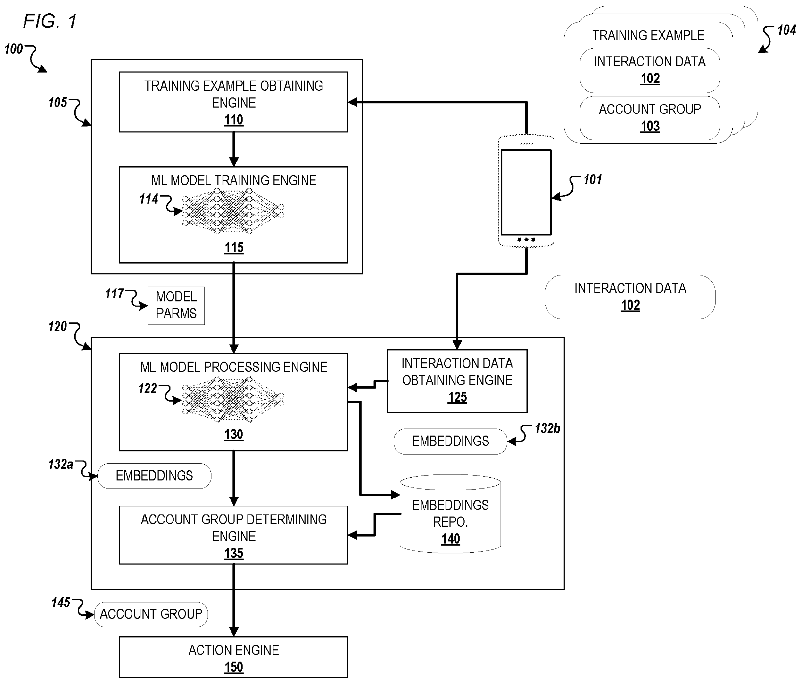

FIG. 1 shows an example of an environment for account aggregation using machine learning. The environment can include client devices 101, a training system 105, an aggregation system 120, and an action engine 150.

A client device 101 is an electronic device that is capable of requesting and receiving resources over the network. Example client devices 101 include personal computers, mobile communication devices, wearable devices, personal digital assistants, and other devices that can send and receive data over the network. A client device 101 typically includes user applications, such as a web browser, to facilitate the sending and receiving of data over the network, but native applications executed by the client device 101 can also facilitate the sending and receiving of data over the network. Client devices 101 include hardware and/or software that enable user interactions. For example, a client device can include a mouse, pen and/or touch screen through which a user can provide various interactions such as taps and swipe. A client device 101 can include a physical and/or virtual keyboard which accepts typing input from a user. Client devices 101, and in particular personal digital assistants, can include hardware and/or software that enable voice interaction with the client devices 101. For example, the client device 101 can include a microphone through which users can submit audio (e.g., voice) input, such as commands, search queries, browsing instructions, smart home instructions, and/or other information. Additionally, the client devices 101 can include speakers through which users can be provided audio (e.g., voice) output. A personal digital assistant can be implemented in any client device 101, with examples including wearables, a smart speaker, home appliances, cars, tablet devices, or other client devices 101. Client devices 101 can also include video streaming devices and gaming devices, e.g., gaming consoles.

The client device 101 can detect and/or create user interaction data 102 corresponding to actions performed by the user at the client device 101. In some implementations, user interaction data 102 can include data relating to a user interaction with a screen, keyboard, mouse, microphone or any other input device included in, or coupled to, the client device 101. For example, the data can describe the number of keys pressed within an interval, the average rate of key presses, which keys are pressed, timing patterns for interactions with different strings of key presses (e.g., a first time between typing t, then r, and a second time between typing a, then v), the pressure observed by a tap and/or swipe, the rate at which a user swipes, the tap rate, screen location of taps and swipes, the times of day the interactions with the client device 101 occur, the geographic location (e.g., expressed as Global Positioning Satellite (GPS) coordinates) of the client device 101, among many other examples. In some implementations, user interaction data 102 can describe any aspect of interactions with applications on the client device 101. For example, the data can include browsing history, search history, which applications are used and when, and so on.

To facilitate training of a machine learning model, the client device 101 can also provide training examples 104 to the training system 105. Training examples 104 can include user interaction data 102 and an account group identifier 103. The account group identifier can be any unique string of characters that uniquely identifies the account group. The account group identifier could be a user name used by the user when using an account in the group, or some other string of characters. For example, if at a first time, user Amy is using the client device 101 while logged in as user amy1@example.com, the account group identifier "Amy" can be assigned, and, in some implementations, the account amy1@example.com can be associated with the account group identifier 103 "Amy." In this example, training examples provided to the training system 105 would include the interaction data and with the account group identifier "Amy." The training system 105 can train a machine learning model to create an account embedding representing that same account group identifier 103 (e.g., "Amy") using the interaction data 102 received with that same group account identifier 103.

At a second time, user Amy can be using the client device 101, or a different client device, while logged into a different account using the user name superstudent@example.com. In this situation, the account group identifier 103 will also be "Amy" and the account "superstudent@example.com" can also be associated with the account group identifier 103 "Amy." The account group in a training example 104 can be used as a positive anchor during training, as described further below. The client device 101 can also provide training examples 104 to a repository configured to store training examples 104 for use in training a machine learning model 114.

The training system 105 can train a machine learning model 114 to determine account embeddings 132a, 132b (collectively referred to as account embeddings 132, or embeddings 132 for brevity) from user interaction data 102. The training system 105 can include a training example obtaining engine 110 and a machine learning model training engine 115, each of which can be implemented using one or more of data processing devices, code, and/or applications.

An embedding 132 can be a vector of values determined from a larger vector of values. An embedding can be computationally advantageous since user interaction data 102 can include thousands of features values, which can require an excessive amount of computational resources to evaluate at run-time. Rather than using the user interaction data 102, the machine learning model training engine 115 trains a machine learning model 114 to accept an input that includes user interaction data 102 and produce a lower-order vector (e.g., a vector that contains tens or hundreds of values rather than thousands) that is an embedding 132 for the user interaction data 102. The embedding 132 can be used to determine an account group, as described further below.

The training example obtaining engine 110 can obtain training examples 104 from client devices 101. The training example obtaining engine 110 can include an Application Programming Interface (API) which, when called by a client device 101, enables a client device 101 to provide training examples 104 to the training example obtaining engine 110. The training example obtaining engine 110 can also obtain training examples from a repository configured to store training examples 104. For example, if the repository includes a relational database, the training example obtaining engine 110 can obtain the training examples 104 using Structured Query Language (SQL) operations.

The machine learning model training engine 115 can obtain training examples 103 from the training example obtaining engine 110 and can use those training examples to train a machine learning model 114 to determine embeddings 132 from user interaction data 102. The machine learning model 114 can be any appropriate type of machine learning model for determining embeddings 132, such as a deep neural network (DNN).

As described further below, the loss function used to train the machine learning model is minimized when two accounts are in the same account group 103. The loss function can include a triplet signal consisting of a query signal, a positive anchor and a negative anchor. The positive anchor is an embedding known to be of an account from the same account group as the query signal, while the negative anchor is known to be an account that is not in the same account group as the query signal. The machine learning model training engine 115 trains the machine leaming model 114 to reduce the Euclidean distance between the embedding of the query signal and the embedding of the positive anchor, and to increase the Euclidean distance between the embedding of the query signal and the embedding of the negative anchor.

Once the machine learning model 114 has been trained, the machine learning model training engine 115 can provide the trained machined learning model 122 to the aggregation system 120. In some implementations, the machine learning model training engine 115 can provide model parameters 117 to the aggregation system 120, which can use the model parameters when using the trained machined learning model 122. In some implementations, the machine learning model training engine 115 can make the trained machined learning model 122 available to the aggregation system 120, for example, by providing the location in storage of the trained machine learning model 122 on a server or storage system.

The aggregation system 120 is configured to produce an account group 145 using interaction data 102 provided by a client device 101. The aggregation system can include an interaction data obtaining engine 125, a machine learning model processing engine 130, an account group determining engine 135 and an embeddings repository 140.

The interaction data obtaining engine 125 can accept user interaction data 102 from client devices 101 and provide the user interaction data 102 to the machine learning model processing engine 130. The interaction data obtaining engine 125 can include an API that, when called by a client device 101, allows the client device 101 to supply user interaction data 102 to the interaction data obtaining engine. The API can be provided using any suitable technique such as a Web Services API or a Remote Procedure Call (RPC).

The machine learning model processing engine 130 can process inputs that include user interaction data 102 to produce account embeddings 132. To improve the run-time performance of the system, the machine learning model processing engine 130 can be used to pre-determine account embeddings 132, and to provide the account embeddings 132, and the associated account group 103, to an embeddings repository 140. In addition, the machine learning model processing engine 130 can be used to determine account embeddings 132a for use by the account group determination engine 135, as described further below.

In some implementations, the aggregation system 120 can also store metadata relevant to an embedding 132. For example, aggregation system 120 can determine the geographic location of user interaction data 102 and store the geographic location of an embedding as metadata. As noted above, geographic location can be included in user interaction data 102. The aggregation system 120 can store an association between (e.g., a reference to) an embedding 132 and the metadata for the embedding, e.g., by maintaining a list of references to embeddings 132, and for each embedding 132, storing a reference to the associated metadata.

The embeddings repository 140 can be any appropriate storage system that is configured to store account embeddings 132b and associated account groups 103. For example, the embedding repository 140 can be a relational database, a block storage device or a file system.

The account group determining engine 135 can accept an embedding 132a from the machine learning processing engine 130 and pre-computed embeddings 132b from the embeddings repository 140 and determine the account group 145 for the embedding 132a, for example, by identifying the embedding in the pre-computed embeddings 132b that has the lowest Euclidean distance from the embedding 132a. More specifically, the account group determining engine 135 can determine a Euclidean distance between the embedding 132a and each of the pre-computed embeddings 145 to determine the pre-computed embedding 145 that has the smallest. Euclidean distance. The account group determining engine 135 can provide the account group 145 to the action engine 150. In some implementations, if the smallest Euclidean distance is greater than a configured threshold value, the account group determining engine 135 can determine that the user interaction data 102 is not associated with any known account group identifier 103, and no account group 145 would be provided to the action engine 150.

The action engine 150 can accept account groups 145 from the aggregation system 120 and perform actions appropriate for the account groups 145 on components present in the environment, such as authorizing a proposed user action on the client device 101. While the action engine 150 is illustrated as being a separate component in the environment, in some implementations, the action engine 150 can be a component of the aggregation system 120.

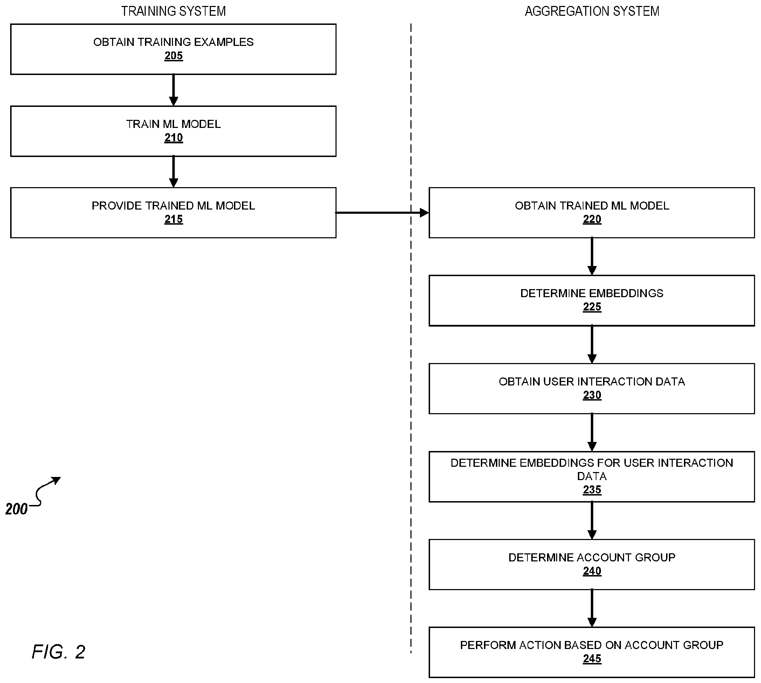

FIG. 2 is a flow diagram of an example process for account aggregation using machine learning. Returning to the example described above, when the system obtains user interaction data, using the process of FIG. 2, the system can determine embeddings, and use the embeddings to determine an associated account group, e.g., "Amy," in the example above, regardless of the account or device being used.

For convenience, the process 200 will be described as being performed by a training system and an aggregation system, which can include an action engine, e.g., the training system 105 and aggregation system 120 of FIG. 1, appropriately programmed to perform the process. Operations of the process 200 can also be implemented as instructions stored on one or more computer readable media which may be non-transitory, and execution of the instructions by one or more data processing apparatus can cause the one or more data processing apparatus to perform the operations of the process 200. One or more other components described herein can perform the operations of the process 200.

The training system obtains 205 training examples using any appropriate data gathering technique. For example, the training system can include an API that enables client devices, when authorized by a user of the device, to provide training examples by calling the API. Client devices can also store training examples on a storage system, and the training system can obtain the training examples by retrieving them from the storage system. For example, if the storage system is a relational database system, client devices can store training examples by calling SQL operations on the database, and the training system can obtain the training examples by calling SQL operations.

The training system can train (210) a machine learning model using the training examples. As described above, training examples can include (i) an indication of an account group associated with a user, and (ii) user interaction data describing interactions of the user with the computer system. The training examples can further include an indication of the account being used by the user at the time the user interaction data was produced.

The training system can train the machine learning model iteratively, where during an iteration one or more parameters of the machine learning model are adjusted, and an output (e.g., predicted characteristic value) is generated based on the training data. For each iteration, a loss value can be determined based on a loss function. The loss value can represent a degree of inaccuracy of the output of the machine learning model as compared to a desired or known value (e.g., known characteristic). The loss value can be described as a representation of a degree of difference between the output of the machine learning model and the desired output of the machine learning model for a particular example. The desired output for a training example can be included in the training example, for example, as an account group for user interaction data.

The loss function can use a triplet signal consisting of the query signal (*A*), a positive anchor (P) and a negative anchor (N). For example, the loss function 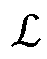 can be: $L \left(A, P, N\right) = max \left({\left‖f\left(A\right)-f\left(P\right)\right‖}^{2}-{\left‖f\left(A\right)-f\left(N\right)\right‖}^{2}+α,0\right)$ (1)

With such a function, the loss is reduced when the Euclidean distance between the query signal (*A*) and the positive anchor (P) becomes smaller and the Euclidean distance between the query signal (*A*) and the negative anchor *(N)* become larger, indicating that the query signal is converging on positive examples and diverging from negative examples. The positive and negative anchors can be chosen randomly or pseudo-randomly from the available training examples. α can be a regularization parameter that spreads clusters in Euclidean space, reducing the likelihood that an embedding is incorrectly assigned to an account group. Values of *α* can be in the range 0.5 to 1.0, inclusive, although other values can be used.

In some examples, if the loss ( 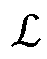 ) does not meet an expected value (e.g., is not equal to zero or not within a configured amount of zero), parameters of the machine learning model can be adjusted in another iteration of training. In some examples, the iterative training continues for a pre-defined number of iterations. In some examples, the iterative training continues until the loss value meets the expected value or is within a threshold range of the expected value.

Once the model has been trained, the training system can provide (215) the trained machine learning model, and the aggregation system can obtain (220) the trained model. The training system can provide the trained model using any appropriate technique. For example, the training system can provide to the aggregation system the location in a storage system at which the trained machine learning model is stored, e.g., by calling an API on the aggregation system that is configured to accept the storage location of a trained machine learning model. In another example, the training system can store the trained model parameters on a storage system (e.g., a database, a file system or block storage), and the aggregation system can obtain the model parameters from the storage system.

In some implementations, the aggregation system can obtain reference data and can determine (225) embeddings for the user interaction data. All or part of the reference data can be all or part of the training examples. Each item in the reference data can include user interaction data with the associated account group identifier for the user interaction data, and each account group identifier can be associated with an account.

The aggregation system can determine the embedding for each item in the reference data by processing an input that includes the user interaction data, or an encoding of the user interaction data, using the trained machine learning, which has been trained (e.g., in operation 210) to produce embedding. Computing embeddings for the reference data enables the system to determine account groups, e.g., as described in reference to operation 240. The aggregation system can store the embeddings and corresponding account groups for later use, e.g., in an embedding repository. In some implementations, embeddings for the reference data and the associated account groups can be provided to the aggregation system, e.g., by another system that stores the embeddings and associated account groups on a storage system, and the aggregation system can retrieve the embeddings and account groups from the storage system rather than, or in addition to, computing them.

The aggregation system can obtain (230) user interaction data describing interactions with multiple different accounts on one or more computer systems. The aggregation system can obtain the user interaction data using various techniques. For example, the aggregation system can include an API (e.g., a WebServices API or an RPC API, among other examples) configured to accept user interaction data. In another example, the aggregation system can retrieve user interaction data from a storage system.

The aggregation system can determine (235) an embedding for the user interaction data. The aggregation system can process an input that includes the user interaction data, or an encoding of the user interaction data, using a trained machine learning model that is configured to produce a result that includes an account embedding that differs from the user interaction data. As described above, the machine learning model can be a DNN trained using a loss function computed on a triplet signal function.

From at least the embedding determined from the user interaction data, the aggregation system can determine (240) an identifier for an account group that has an account embedding that matches the account embedding determined in operation 235. The account group can include at least two accounts assigned to the same user.

The aggregation system can determine the match using various matching techniques. In some implementations, the account group is determine by computing Euclidean distances between the embedding for the user interaction data, e.g., as determined in operation 235, and other embeddings available to the aggregation system, e.g., embedding for the reference data as determined on operation 225. Euclidean distance can be determined as: $\sqrt{{\sum }_{i = 0}^{i < features} {\left({E}_{i}^{u}-{E}_{i}^{r , j}\right)}^{2}}$

Where ${E}_{i}^{u}$ is the i^{th} feature value in the embedding of the user interaction data and ${E}_{i}^{r , j}$ is the i^{th} feature value in the embedding of the j^{th} instance of reference data. The aggregation system can select an account group of the instance that satisfies a configured threshold for the Euclidean distance. For example, the aggregation system can select the account group associated with an embedding for which the Euclidean distance is below a configured value such as 0.6, or another value below 1.0.

In some implementations, to reduce the amount of computation necessary to determine the account group, the aggregation system can determine Euclidean distances for only a subset of the reference data. For example, the aggregation system can limit the embeddings of reference data that are evaluated to the embeddings of reference data that relate to interactions that occurred within a configured distance of the user interaction data. The configured distance can be, e.g., 0.5 km, 1 km, 2 km, and so on. As described in reference to FIG. 1, the geographic location of user interaction data can be stored as metadata associated with an embedding, where it is available to the aggregation system.

The aggregation system can determine the distance between the location of user interaction data and location of each reference embedding, e.g., by computing the distance between GPS coordinators (or other indications of location) of the user interaction data and of each reference embedding. Since GPS coordinates contain fewer values than embeddings do, such a location computation requires fewer computing resources than do embedding comparisons. The verification can eliminate from consideration all reference embeddings that are outside the configured range.

The aggregation system, or another system or engine in the environment, can perform (245) an action based on the account group determined in operation 240. The action can differ from another action that would have been performed based on a different account group - that is, an account group that is not the same as the account group determined in operation 240. For example, an operation can be authorized for the determined account group, and the operation would not have been authorized for a different account group.

The aggregation system can perform a wide range of actions. For example, the aggregation system can authenticate the user who provided the user interaction data at least in part according to the account group. In this example, even if a correct user identifier and password is provided, the aggregation system can authenticate the user only if a particular account group is determined in operation 240. In another example, information can be provided to the user account according to the account group. The information can be customized not only for the particular user account, but also for a particular user who might have created multiple accounts. Thus, the information provided to the specific user (i.e., the user determined in part by the user interaction data) can be more relevant to that user.

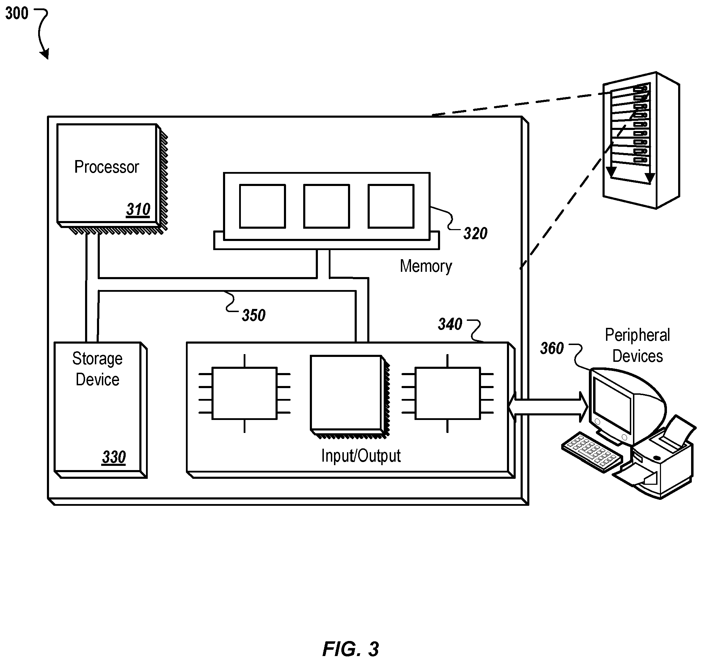

FIG. 3 is a block diagram of an example computer system 300 that can be used to perform operations described above. The system 300 includes a processor 310, a memory 320, a storage device 330, and an input/output device 340. Each of the components 310, 320, 330, and 340 can be interconnected, for example, using a system bus 350. The processor 310 is capable of processing instructions for execution within the system 300. In one implementation, the processor 310 is a single-threaded processor. In another implementation, the processor 310 is a multi-threaded processor. The processor 310 is capable of processing instructions stored in the memory 320 or on the storage device 330.

The memory 320 stores information within the system 300. In one implementation, the memory 320 is a computer-readable medium. In one implementation, the memory 320 is a volatile memory unit. In another implementation, the memory 320 is a non-volatile memory unit.

The storage device 330 is capable of providing mass storage for the system 300. In one implementation, the storage device 330 is a computer-readable medium. In various different implementations, the storage device 330 can include, for example, a hard disk device, an optical disk device, a storage device that is shared over a network by multiple computing devices (e.g., a cloud storage device), or some other large capacity storage device.

The input/output device 340 provides input/output operations for the system 300. In one implementation, the input/output device 340 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other input/output devices, e.g., keyboard, printer and display devices 360. Other implementations, however, can also be used, such as mobile computing devices, mobile communication devices, set-top box television client devices, etc.

Although an example processing system has been described in FIG. 3, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a computer-readable medium for execution by, or to control the operation of, data processing apparatus. The computer-readable medium can be a manufactured product, such as a hard drive in a computer system or an optical disc sold through retail channels, or an embedded system. The computer-readable medium can be acquired separately and later encoded with the one or more modules of computer program instructions, such as by delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, special purpose microprocessors. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

To provide for interaction with a user, embodiments of the subject matter described in this specification can be implemented on a computing device capable of providing information to a user. The information can be provided to a user in any form of sensory format, including visual, auditory, tactile or a combination thereof. The computing device can be coupled to a display device, e.g., an LCD (liquid crystal display) display device, an OLED (organic light emitting diode) display device, another monitor, a head mounted display device, and the like, for displaying information to the user. The computing device can be coupled to an input device. The input device can include a touch screen, keyboard and a pointing device, e.g., a mouse or a trackball, by which the user can provide input to the computing device. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Intemet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination. Thus, unless explicitly stated otherwise, or unless the knowledge of one of ordinary skill in the art clearly indicates otherwise, any of the features of the embodiments described above can be combined with any of the other features of the embodiments described above.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and/or parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. For example, the actions recited in the claims can be performed in a different order and still achieve desirable results.

## Claims

1. A computer-implemented method comprising:
obtaining user interaction data (102) for a user describing interactions by the user with a given account of multiple different accounts assigned to the user on one or more computer systems (101);
processing an input comprising the user interaction data using a machine learning model (114, 122) that is configured to produce a result that includes a first account embedding (132a) that differs from the user interaction data;
from at least the first account embedding, determining an account group (145) that corresponds to the user interaction data, wherein the account group is determined at least in part by determining Euclidean distances or other matching technique between the first account embedding and account embeddings for at least a subset of known account groups; and
performing a first action based on the account group, wherein the first action differs from a second action that would have been performed based on a different account group that is not the account group, and wherein the first action comprises providing information to the given account of the multiple different accounts according to the account group.

2. The computer-implemented method of claim 1, further comprising:
obtaining, from a first user of a plurality of users, training examples (104), the training examples comprising: (i) an indication of the first user, and (ii) user interaction data (102) describing interactions of the first user with a computer system of the one or more computer systems; and
training the machine learning model using the training examples.

3. The computer-implemented method of claim 1, wherein the user interaction data comprises a data relating to at least one of a user interaction with a screen, a keyboard or a mouse.

4. The computer-implemented method of claim 1, wherein the first action comprises authenticating the user at least in part according to the account group.

5. The computer-implemented method of claim 1, further comprising: determining a location for the user; and wherein the subset of known account groups is determined at least in part based on the location.

6. The computer implemented method of claim 1, wherein the user interaction data comprises data describing at least one of the number of keys pressed within an interval, the average rate of key presses, which keys are pressed, timing patterns for interactions with different strings of key presses, the pressure observed by a tap and/or swipe, the rate at which a user swipes, the tap rate, screen location of taps and swipes, the times of day the interactions with the one or more computer systems occur and the geographic location of the one or more computer systems.

7. A system (300) comprising one or more computers (101) and one or more storage devices (320, 330) storing instructions that when executed by the one or more computers cause the one or more computers to perform the computer implemented method of any preceding claim.

8. One or more non-transitory computer-readable storage media (320, 330) storing instructions that when executed by one or more computers cause the one or more computers to perform the computer implemented method of any of claims 1 to 6.

## Patentansprüche

1. Computerimplementiertes Verfahren, umfassend:
Erhalten von Benutzerinteraktionsdaten (102) für einen Benutzer, die Interaktionen des Benutzers mit einem bestimmten Konto von mehreren verschiedenen Konten beschreiben, die dem Benutzer auf einem oder mehreren Computersystemen (101) zugewiesen sind; Verarbeiten einer Eingabe, die die Benutzerinteraktionsdaten umfasst, unter Verwendung eines Maschinenlernmodells (114, 122), das dazu ausgebildet ist, ein Ergebnis zu erzeugen, das eine erste Kontoeinbettung (132a) umfasst, die sich von den Benutzerinteraktionsdaten unterscheidet;
Bestimmen, aus mindestens der ersten Kontoeinbettung, einer Kontogruppe (145), die den Benutzerinteraktionsdaten entspricht, wobei die Kontogruppe zumindest teilweise durch Bestimmen euklidischer Abstände oder eines anderen Abgleichverfahrens zwischen der ersten Kontoeinbettung und Kontoeinbettungen für mindestens eine Teilmenge bekannter Kontogruppen bestimmt wird; und
Durchführen einer ersten Aktion auf der Grundlage der Kontogruppe, wobei sich die erste Aktion von einer zweiten Aktion unterscheidet, die auf der Grundlage einer anderen Kontogruppe durchgeführt worden wäre, die nicht die Kontogruppe ist, und wobei die erste Aktion Bereitstellen von Informationen an das bestimmte Konto der mehreren verschiedenen Konten gemäß der Kontogruppe umfasst.

2. Computerimplementiertes Verfahren nach Anspruch 1, ferner umfassend:
Erhalten, von einem ersten Benutzer einer Mehrzahl von Benutzern, von Trainingsbeispielen (104), wobei die Trainingsbeispiele umfassen: (i) eine Angabe des ersten Benutzers und (ii) Benutzerinteraktionsdaten (102), die Interaktionen des ersten Benutzers mit einem Computersystem des einen oder der mehreren Computersysteme beschreiben; und Trainieren des Maschinenlernmodells unter Verwendung der Trainingsbeispiele.

3. Computerimplementiertes Verfahren nach Anspruch 1, wobei die Benutzerinteraktionsdaten Daten umfassen, die sich auf mindestens eines von einer Benutzerinteraktion mit einem Bildschirm, einer Tastatur oder einer Maus beziehen.

4. Computerimplementiertes Verfahren nach Anspruch 1, wobei die erste Aktion Authentifizieren des Benutzers zumindest teilweise gemäß der Kontogruppe umfasst.

5. Computerimplementiertes Verfahren nach Anspruch 1, ferner umfassend: Bestimmen eines Standorts für den Benutzer; und wobei die Teilmenge bekannter Kontogruppen zumindest teilweise auf der Grundlage des Standorts bestimmt wird.

6. Computerimplementiertes Verfahren nach Anspruch 1, wobei die Benutzerinteraktionsdaten Daten umfassen, die mindestens eines von Folgendem beschreiben: die Anzahl der innerhalb eines Intervalls gedrückten Tasten, die durchschnittliche Rate der Tastendrücke, welche Tasten gedrückt werden, Zeitmuster für Interaktionen mit verschiedenen Folgen von Tastendrücken, den durch ein Tippen und/oder Wischen beobachteten Druck, die Rate, mit der ein Benutzer wischt, die Tipprate, die Bildschirmposition von Tippvorgängen und Wischvorgängen, die Tageszeiten, zu denen die Interaktionen mit dem einen oder den mehreren Computersystemen stattfinden, und den geografischen Standort des einen oder der mehreren Computersysteme.

7. System (300), umfassend einen oder mehrere Computer (101) und eine oder mehrere Speichervorrichtungen (320, 330), die Anweisungen speichern, die bei Ausführung durch den einen oder die mehreren Computer den einen oder die mehreren Computer veranlassen, das computerimplementierte Verfahren nach einem der vorhergehenden Ansprüche durchzuführen.

8. Ein oder mehrere nichtflüchtige computerlesbare Speichermedien (320, 330), die Anweisungen speichern, die bei Ausführung durch einen oder mehrere Computer den einen oder die mehreren Computer veranlassen, das computerimplementierte Verfahren nach einem der Ansprüche 1 bis 6 durchzuführen.

## Revendications

1. Procédé mis en œuvre par ordinateur, comprenant :
l'obtention de données d'interaction utilisateur (102) pour un utilisateur décrivant des interactions de l'utilisateur avec un compte donné parmi plusieurs comptes différents attribués à l'utilisateur sur un ou plusieurs systèmes informatiques (101) ; le traitement d'une entrée comprenant les données d'interaction utilisateur à l'aide d'un modèle d'apprentissage automatique (114, 122) configuré pour produire un résultat qui comporte un premier plongement de compte (132a) qui diffère des données d'interaction utilisateur ;
à partir au moins du premier plongement de compte, la détermination d'un groupe de comptes (145) qui correspond aux données d'interaction utilisateur, dans lequel le groupe de comptes est déterminé au moins en partie en déterminant les distances euclidiennes ou une autre technique de correspondance entre le premier plongement de compte et les plongements de comptes pour au moins un sous-ensemble de groupes de comptes connus ; et
la réalisation d'une première action sur la base du groupe de comptes, dans lequel la première action diffère d'une seconde action qui aurait été réalisée sur la base d'un groupe de comptes différent qui n'est pas le groupe de comptes, et dans lequel la première action comprend la fourniture d'informations au compte donné parmi les plusieurs comptes différents en fonction du groupe de comptes.

2. Procédé mis en œuvre par ordinateur selon la revendication 1, comprenant en outre :
l'obtention, d'un premier utilisateur parmi une pluralité d'utilisateurs, d'exemples d'entraînement (104), les exemples d'entraînement comprenant : (i) une indication du premier utilisateur, et (ii) des données d'interaction utilisateur (102) décrivant les interactions du premier utilisateur avec un système informatique parmi les un ou plusieurs systèmes informatiques ; et
l'entraînement du modèle d'apprentissage automatique à l'aide des exemples d'entraînement.

3. Procédé mis en œuvre par ordinateur selon la revendication 1, dans lequel les données d'interaction utilisateur comprennent des données relatives à au moins l'une d'une interaction de l'utilisateur avec un écran, un clavier ou une souris.

4. Procédé mis en œuvre par ordinateur selon la revendication 1, dans lequel la première action comprend l'authentification de l'utilisateur au moins en partie en fonction du groupe de comptes.

5. Procédé mis en œuvre par ordinateur selon la revendication 1, comprenant en outre : la détermination d'un emplacement pour l'utilisateur ; et dans lequel le sous-ensemble de groupes de comptes connus est déterminé au moins en partie sur la base de l'emplacement.

6. Procédé mis en œuvre par ordinateur selon la revendication 1, dans lequel les données d'interaction utilisateur comprennent des données décrivant au moins l'un des éléments suivants : le nombre de touches pressées dans un intervalle, le taux moyen de pression des touches, les touches pressées, les modèles temporels des interactions avec différentes chaînes de touches pressées, la pression observée lors d'un tapotement et/ou d'un glissement, la vitesse à laquelle un utilisateur effectue un glissement, la fréquence de tapotement, l'emplacement à l'écran des tapotements et des glissements, les moments de la journée où se produisent les interactions avec les un ou plusieurs systèmes informatiques et la localisation géographique des un ou plusieurs systèmes informatiques.

7. Système (300) comprenant un ou plusieurs ordinateurs (101) et un ou plusieurs dispositifs de stockage (320, 330) stockant des instructions qui, lorsqu'elles sont exécutées par les un ou plusieurs ordinateurs, amènent les un ou plusieurs ordinateurs à réaliser le procédé mis en œuvre par ordinateur selon une quelconque revendication précédente.

8. Un ou plusieurs supports de stockage non transitoires lisibles par ordinateur (320, 330) stockant des instructions qui, lorsqu'elles sont exécutées par un ou plusieurs ordinateurs, amènent les un ou plusieurs ordinateurs à réaliser le procédé mis en œuvre par ordinateur selon l'une quelconque des revendications 1 à 6.
